# EUROPEAN PATENT APPLICATION

(11) **EP 1 295 915 A1**
(43) Date of publication of application: **26.03.2003**
(21) Application number: 01000493.5
(22) Date of filing: 21.09.2001
(51) Int. Cl.: C09D 5/03, B01J 2/04

(54) **Method for solidification of a liquid paint component**

(71) Applicant: DSM N.V., 6411 TE Heerlen (NL)
(72) Inventor: Molhoek, Leendert Jan, 8072 HV, Nunspeet (NL); Benthem van, Rudolfus Antonius Theodorus Maria, 6141 BR , Limbrecht (NL); Duijnhoven van, Frank, 5704 AT , Helmond (NL); Hendriks, Patrick Herman Marie, 6191 BP , Beek (NL); Hout van, Johannes Barend, 8131 ST , Wijhe (NL); Loontjens, Jacobus Antonius, 6231 KK , Meerssen (NL); Rossum van, Cornelis Albertus Joannes Joseph, 8016 CH , Zwolle (NL); Spoolder, Biance Maria Johanna, 7623 CC , Borne (NL); Gelissen, Franciscus Wilhelmus Maria, 52538 Selfkant 2 (DE)
(74) Representative: van Tol-Koutstaal, Charlotte Adeliene

(57) **Abstract**

The invention relates to a method for solidification of a liquid paint component wherein the liquid paint component is packed with a solid auxiliary component to form a solidified liquid paint component.

The invention further relates to a solidified liquid paint component, to the use of a solidified liquid paint component in a powder paint, to a method for producing a powder paint, to a coating produced by curing a powder paint binder composition, and to a fully or partly coated substrate.

## Description

The invention relates to a method for solidification of a liquid paint component. Furthermore it relates to a solidified liquid paint component, to the use of a solidified liquid paint component in a powder paint, to a method for producing a powder paint, to a coating produced by curing a powder paint binder composition, and to a fully or partly coated substrate.

Components that are used for powder paint binder compositions are usually not liquid at room temperature for several reasons. One of these reasons is that liquid components would normally not result in a solid end product from which a powder can be made that is stable at room temperature. Liquid components are here and hereafter defined as components with a melt or glass transition temperature below room temperature. One might be able to form a powder from the liquid component by cooling down the liquid sufficiently. To maintain the powder structure, however, the powder should be kept cooled down, also during storage time and processing, which would cost a lot of energy, if even possible. Another reason lies in the efficiency of the mixing process. For powder paint compositions the stoichiometry of the added components is of crucial relevance for the properties of the final coating. Therefore these components are to be adequately mixed, resulting in a relative homogeneous mixture. As is known to the man skilled in the art, however, the flow pattern of liquid components differs from the flow pattern of solid components, resulting in an inhomogeneous mixture. This could lead to problems, for example blocked or fouled equipment.

The object of the present invention is to provide a method for making a liquid component suitable for a powder paint binder composition whilst overcoming the above-mentioned disadvantages.

This object is reached by the present invention in that it provides a method for solidification of a liquid paint component wherein the liquid paint component is packed with a solid auxiliary component to form a solidified liquid paint component. A solidified liquid paint component is here and hereafter defined as a liquid paint component that is packed with a solid auxiliary component resulting in a stable liquid-solid agglomerate that behaves like a solid particle at temperatures below room temperature.

All liquid paint components are suitable for the present invention. Preferably, the liquid paint components suitable for the present invention are liquid binder components. Liquid binder components are here and hereafter defined as liquid components that are part of the powder paint binder composition. A powder paint binder composition is here and hereafter defined as the paint components that are needed to form a network.

Liquid binder components suitable for the present invention are for example liquid crosslinkers, liquid initiators, liquid catalysts and/or liquid resins, for example liquid alkyd resins, and/or liquid UV-curable compounds. Also mixtures of liquid components may be used.

The combination of a resin and a crosslinker with optionally an initiator and/or a catalyst is generally used in known for the powder paint binder compositions, and is usually referred to in the art as a so-called 2K system (2 component system). The crosslinker is then defined as the compound of which less than 50 wt% in the binder composition, with the resin being the compound of which is equal to or more than 50 wt% is present in the binder composition, the total of both components being 100 wt%.

The present invention, however, makes it possible to use other compositions as usually used in the powder paint industry, for example alkyd resins, or liquid UV-curable compounds, which do not require an additional component to react with to form a network. This is usually referred to in the art as a so-called 1K system (1 component system). It is also possible to have an additional initiator or catalyst in the powder paint binder composition. The 1K components can for purposes of describing the present invention be part of or constitute a powder paint binder composition.

It is preferred that in case of 2K systems a combination of a liquid crosslinker with a liquid resin is avoided, to prevent problems with early network formation.

Once fillers, pigments and usual additives are added to the powder paint binder composition, the composition is called a powder paint composition. After obtaining the desired powder particle size, for example by grinding and sieving the powder paint composition, the composition is called a powder paint. The powder paint can then be applied to a substrate and cured, to form a coating. This results in a fully or partly coated substrate.

Examples of suitable liquid crosslinkers are liquid epoxides, liquid acrylates, liquid methacrylates, liquid vinylethers, liquid isocyanates, liquid amines, liquid glycidyl ethers, liquid glycidyl esters, liquid hydroxyalkylamides, liquid anhydrides, liquid acids and/or liquid amino resins. Also mixtures of crosslinkers can be used.

Examples of suitable liquid epoxides are epoxidised fatty acids, esters and oils, for example epoxidized linseed oil, epoxidized soybean oil.

Examples of suitable liquid acrylates are ethyleneglycoldiacrylate, diethyleneglycoldiacrylate, triethyleneglycoldiacrylate, propyleneglycoldiacrylate, dipropyleneglycoldiacrylate, tripropyleneglycoldiacrylate, ethoxylated trismethylolpropanetriacrylate, ethoxylated bisphenol-A-diacrylate, trismethylolpropanetriacrylate, bisphenol-A-diacrylate,laurylacrylate, isobornylacrylate, adducts of 2-hydroxyethyl-, 3-hydroxypropyl, 4-hydroxybutylacrylate with diisocyanates and/or the isocyanurate trimers thereof.

Examples of suitable liquid methacrylates are ethyleneglycoldimethacrylate, diethyleneglycoldimethacrylate, triethyleneglycoldimethacrylate, propyleneglycoldimethacrylate, ethoxylated trismethylolpropanetrimethacrylate, ethoxylated bisphenol-A-dimethacrylate, dipropyleneglycoldimethacrylate, tripropyleneglycoldimethacrylate, trismethylolpropanetrimethacrylate, bisphenol-A-dimethacrylate, laurylmethacrylate, isobornylmethacrylate, adducts of 2-hydroxyethyl-, 3-hydroxypropyl, 4-hydroxybutylmethacrylate with diisocyanates and/or the isocyanurate trimers thereof.

Examples of suitable liquid vinylethers are ethyleneglycoldivinylether, diethyleneglycoldivinylether, triethyleneglycoldivinylether, cyclohexanedimethanoldivinylether, butanedioldivinylether, adducts of hydroxyethylvinylether, hydroxybutylvinylether, cyclohexanedimethanolvinylether with diisocyanates and/or the isocyanurate trimers thereof.

Examples of suitable isocyanates are 1,6-hexanediisocyanate and/or the isocyanurate trimer thereof, 1,12-docdecanediisocyanate and/or the isocyanurate trimer thereof, tris-isocyanatononane (3-isocyanatoethyl-1,7diisocyanatoheptane, isophorondiisocyanate, 3,4-isocyanatomethyl-1-methylcyclohexyldiisocyanate, and/or 4,4-methylenebis(cyclohexylisocyanate) and/or the isocyanurate trimer thereof. The liquid isocyanates are preferably blocked with for example, caprolactam, methylethylketonoxim, butanol or triazole. Also the so-called internally blocked derivatives of the liquid isocyanates are suitable for this invention. These derivatives are usually referred to as uretdiones.

Examples of suitable liquid amines are hexanediamine, bis(ethylene)triamine, bis(hexamethylene)triamine, 3-aminoethyl-1,7-aminoheptane, and/or tris(aminoethyl)amine.

Examples of suitable liquid glycidyl ethers are ethyleenglycoldiglycidylether, butaandioldiglycidylether, hexaandioldiglyicdylether and/or trimethylolpropanetriglycidylether, bisphenol-A-diglycidylether and oligomers thereof.

Examples of suitable liquid glycidyl esters are triglycidyltrimellitate, trigylicdylcitrate, diglycidyladipate, and/or diglycidyl-ophthalate. Especially suitable are mixtures of triglycidyltrimellitate and diglycidylterephthalate and/or diglycidylisophthalate.

Examples of suitable liquid hydroxyalkylamides are N,N-di-2-hydroxyethyl-acetamide, N,N-di-2-hydroxyethyl-formamide, N,N-di-2-hydroxyethylpropionamide, N,N-di-2-hydroxyethyl-lauramide, N,N-di-2-hydroxypropylacetamide, N,N-di-2-hydroxypropyl- formamide, N,N-di-2-hydroxypropylpropionamide, N,N-di-2-hydroxypropyl-lauramide, bis(N,N-di-2-hydroxyethyl)-succinamide, bis(N,N-di-2-hydroxyethyl)-glutaramide, bis(N,N-di-2-hydroxypropyl)-succinamide, and/or bis(N,N-di-2-hydroxypropyl)-glutaramide, and mixtures of the above with bis(N,N-di-2-hydroxyethyl)-adipamide and/or bis(N, N-di-2-hydroxypropyl)-adipamide.

Examples of suitable liquid aminoresins are methylolated melamines, urea, benzoguanamines and glycourils, and methyl- and/or butylethers thereof, Uramex™ U238, NF821, NF822(DSM Resins), Cymel™ 303, 325, 328 (DSM Resins), Setamine™ US138 (AKZO-Nobel), Resamine™ HF155 (Solutia), and/or Maprenal™ MF820 (BASF).

Examples of suitable liquid acids and their anhydrides are fatty acid dimers, succinic acid, succinic anhydride, glutaric acid, glutaric anhydride, 2-octenylsuccinic acid, 2-octenyl-succinic anhydride, 2-dodecenyl-succinic acid and/or 2-dodecenyl-succinic anhydride.

Examples of liquid resins suitable for the present invention are all resins that are liquid at room temperature. Suitable resins can be for example liquid polyesters, liquid polyacrylates, liquid polyurethanes and/or liquid epoxide resins, for example bisphenol-A-diglycidylether and oligomers thereof with bisphenol-A. Preferably the liquid resins are alkyd resins and/or UV-curable compounds.

Suitable alkyd resins are for example chain stopped alkyd resins, high solid alkyd resins, waterborne alkyd resins, and/or longoil alkyds, for example based on soybean oil. The alkyd resin can be in pure form, emulsified or dissolved in a solvent.

Suitable UV-curable compounds are for example liquid unsaturated compounds for example (low molecular) epoxy acrylates, polyurethane acrylates, polyester acrylates, acrylic acrylates, vinyl ethers, allyl ethers, epoxy methacrylates, polyester methacrylates, polyurethane methacrylates, acrylic methacrylates, unsaturated polyesters (based on maleic acid, fumaric acid, itaconic acid). These UV-curable compounds can be monomers, oligomers and/or polymers. The unsaturation of the UV-curable compounds can for example range from 1-8 unsaturations per molecule. The UV-curable compound preferably is a mono-, di-, or polyfunctional acrylate, mono-, di-or polyfunctional methacrylate, or a mixture of any of them.

Suitable liquid initiators can be for example liquid photo-initiators, liquid peroxides and/or liquid azodinitriles. Examples of suitable liquid photo-initiators are Darocure™ 1173, 4265 (CIBA), Irgacure™ 149, 500, 1000, 1700 (CIBA), Speedcure™ BEN, PDA (Lambson Chemicals), Lucirin™ TPO (BASF), Esacure™ TZT, KTO/25 (Visconti), Cyracure™ UVI-6974(Union Carbide), and/or 3M™ FX-512. Examples of suitable liquid peroxides are dilaurylperoxide, methylethylketonperoxide, tert-amylperoxypivalate (Trigonox™ 125 (AKZO-Nobel)), tert-butylperoxypivalate (Trigonox™ 25), 1,1-bis(tert-butylbis(3,5,5-trimethylhexanoyl)peroxide (Trigonox™ 36), 2-5-bis(2-ethylhexanoylperoxy)-2,5-dimethylhexane (Trigonox™ 141), tert-amylperoxy-2-ethylhexanoate (Trigonox™ 121, TBPEH), tert-butylperoxy-2-ethylhexanoate (Trigonox™ 21 S), tert-butylperoxydiethylacetate (Trigonox™ 27), tert-butylperoxyisobutanoate (Trigonox™ 41), tert-butylperoxybenzoate (Trigonox™ C, TBPB-SA-M3), tert-butylcumylperoxide (Trigonox™ T), methylethylketoneperoxide, methylisobutylketoneperoxide (MIKP-NA-1 (Laporte Chemicals)), cyclohexanonperoxide (CHP-HA-1 (Laporte Chemicals)), and/or tert-butylperisononanoate (TBPIN (Laporte Chemicals)).

Suitable solid auxiliary compounds for the invention are all components that are solid at room temperature. It is preferred that the used solid auxiliary component to pack the liquid paint component, will not fully dissolve in the liquid paint component at atmospheric pressure and at room temperature. It is even more preferred that the used solid auxiliary component does not dissolve at all in the liquid paint component at atmospheric pressure and at room temperature.

Examples of suitable solid auxiliary components are all solid components that are suitable for use in a powder paint binder composition or a powder paint, such as solid resins, solid crosslinkers, solid initiators, solid fillers, solid pigments and/or solid usual additives.

Examples of suitable solid resins are solid polyesters, solid polyacrylates, solid, polyurethanes and/or solid epoxy resins.

Examples of suitable solid crosslinkers are solid aminoresins, solid epoxides, solid acrylates, solid methacrylates, solid vinylethers, solid isocyanates, solid amines, solid glycidyl ethers, solid glycidyl esters, solid hydroxyalkylamides, solid anhydrides and/or solid acids. Also mixtures of crosslinkers can be used.

Examples of suitable solid fillers are silicium oxide, aluminium hydroxide, aluminium oxide, calcium carbonate, talcum, mica, magnesium carbonate, barium sulfate, calcium sulfate (gypsum).

Pigments suitable for the invention can be both inorganic and organic. Examples of suitable inorganic pigments are titanium dioxide, zinc sulphide iron oxide and/or chromium oxide. Examples of suitable organic pigments are azo compounds.

Examples of suitable solid additives are mould release agents (calcium stearate, magnesium stearate), anti-oxidants (phosphites, hydroquinones, aromatic amines), tribocharging agents (tertiary amines), wetting agents (polybutylacrylate, BYK361, Acronal), degassing agents, flow agents, stabilisers, adhesion promoters and/or anti-foaming agents.

Other examples of suitable solid components are (semi)crystalline waxes, for example Ceridust™ (Clariant GmbH), Luwax™ (BASF), COPO-Wax™ (Coting Products), Ceraflour™ (Byk Cera Chemie), Orgasol™ (Elf Atochem) and/or Lanco Wax™ (Lubrizol Coating Additives).

Further examples of suitable solid auxiliary components are silicic acid, zirconium dioxide, calcium oxide, calcium hydroxide, magnesium oxide, magnesium hydroxide, glass, clays (e.g. montmorillonite, bentonite), melamine, (modified) starch, cellulose, cellulose nitrate, cellulose acetate, cellulose acetate-propionate, cellulose acetate-butyrate.

The present invention allows all kinds of combinations between the liquid paint component and the solid auxiliary component.

In a preferred embodiment of the invention the liquid paint component is packed with a solid auxiliary component which is usually present in a powder paint. An example of this embodiment of the invention is wherein the liquid crosslinker and/or radical initiator is solidified with help of a solid resin and/or the usual additives, fillers and/or pigments.

In another preferred embodiment of the invention the liquid paint component is a trimer of HDI, preferably blocked with caprolactam. Preferably the resulting solidified liquid paint component is used as a crosslinker in polyester-based powder paint binder compositions. A powder paint comprising this powder paint binder composition is especially suitable for outdoor durable, and flexible coatings.

There are several methods to form a solidified liquid paint component from a liquid paint component. In general, the solidified liquid paint component of the present invention is obtainable by packing the liquid paint component with a solid auxiliary component to form a solidified liquid paint component. The amount of used liquid paint component, with respect to the used solid auxiliary component, is preferably larger than 50 wt%, more preferably larger than 60 wt%, even more preferably larger than 80 wt% and most preferably larger than 90 wt%, the total weight of liquid paint component and solid auxiliary component being 100 wt%. For some of the methods it can be needed to adjust the viscosity of the components. It is known to the person skilled in the art how to adjust the viscosity of these components, for example by heating.

A suitable method for solidification of a liquid paint component is mixing the liquid paint component with a molten solid auxilary component, upon which a solidified paint component is obtained by cooling the resulting mixture. The resulting solidified liquid paint component can then be formed into a powder. The molten solid auxiliary component preferably is a (semi)crystalline wax and/or resins. In a preferred embodiment of this method a compressible fluid is added to the liquid paint component and the molten solid auxiliary component under pressure and the free flowing powder is obtained by expanding the pressurized mixture through a nozzle. In an even more preferred embodiment of this method the molten solid auxiliary component is not dissolvable in the liquid paint component at a pressure of 10⁵ Pa and temperatures below room temperature.

Another method to solidify liquid components is to provide the liquid paint component in a pressurised container, where after a gas or a compressible fluid is dissolved in the liquid paint component at high pressure, resulting in a solution, which is subsequently expanded in the presence of a solid auxiliary component, yielding a solidified liquid paint component. An analogous method is described in WO 99/17868, wherein a powder product suitable for the food industry is formed from a liquid food substance or mixture of food substances. It is surprising however that this method is also suitable for liquid paint components, since in the paint industry chemically reactive components are used instead of the relative inert food components.

For hydrophobic liquid paint components also the following method is suitable for solidification. In this method the hydrophobic liquid paint component is dispersed in an aqueous solution, subsequently adding silicic acid to the dispersion, followed by spray drying.

Another suitable method for solidification of hydrophobic liquid paint components comprises dispersing the hydrophobic liquid paint component in an aqueous solution containing a dispersion stabilisation agent and a solid auxiliary component, followed by adding acid to the dispersion and heating, upon which a solidified paint component can be obtained by drying. Preferably the solid auxiliary component is dissolved in the aqueous solution. The solid auxiliary compound suitable for the above method has to be a compound which will form a network upon reaction in the presence of an acid. Suitable solid auxiliary compounds for the above method are for example urea/formaldehyde resin, melamine/formaldehyde resin, sodium silicate, and/or urea/melamine/formaldehyde resin.

The solidified liquid paint component according to the invention can be used in a powder paint binder composition. This powder paint binder composition can be used in a powder paint composition, after adding fillers, pigments and/or usual additives. After obtaining the desired powder particle size, for example by grinding and sieving the powder paint composition, a powder paint is yielded. The solidified liquid paint component according to the invention can thus also be used in a powder paint.

The present invention also relates to a method to produce a powder paint binder composition, a powder paint composition and a powder paint. Where in the following part a powder paint binder composition is mentioned, also a powder paint composition and/or a powder paint are to be included unless otherwise stated. In the current powder paint producing industry no powder paint binder composition is known using a solidified liquid paint component. This invention provides a method to produce a powder paint binder composition comprising a solidified liquid paint composition according to the invention. There are several known methods to produce a powder paint binder composition. Examples of these methods are described in 'Powder Coatings, Chemistry and Technology' from A. Misev (1991, John Wiley) pg. 225-226. The methods known in the art can be used to produce a powder paint binder composition comprising a solidified liquid paint component according to the invention.

A suitable method according to the invention for producing a powder paint binder composition involves feeding the solidified liquid paint component according to the invention, or a mixture thereof, to a mixing device with the other components of a powder paint binder composition. According to another embodiment of this method a powder paint is produced by feeding the solidified liquid paint component according to the invention, or a mixture thereof, to a mixing device with the other components of a powder paint, as pigments, fillers and/or usual additives. For these methods the particle size of the solidified liquid paint component is not critical, as long as the solidified liquid paint component behaves as a free flowing powder.

To ensure good coating properties, the liquid paint component is preferably released from the solidified liquid paint component, so that the liquid paint component is evenly distributed throughout the resultant coating. The release of liquid component can take place during curing of the powder paint and/or during preparation of the powder paint.

The release of liquid paint component can for example be controlled by the choice of the solid auxiliary component. Generally there are two relevant factors that can be influenced by the solid auxiliary component, namely the stability of the solidified liquid paint component under certain mechanical stresses and the stability of the solidified liquid paint component under certain temperatures. For example by choosing a solid auxiliary component with a glass transition temperature or melting point such that it is solid at the mixing temperature whilst it is liquid at the curing temperature it is possible to keep the solidified liquid paint component stable, and thus unreactive, during production of the powder paint binder composition or powder paint composition, but reactive during curing of the powder paint. Analogous one could choose for a solid auxiliary material with a glass transition temperature or melting temperature below the mixing temperature resulting in the release of the liquid component during production of the powder paint binder composition or powder paint composition. When one has chosen for release of the liquid paint component during the preparation of the paint, one should keep in mind that the resulting powder paint binder composition or powder paint composition should still be in solid form at room temperature. The man skilled in the art should therefore pay extra attention to the choice of components.

In yet another embodiment of the method for producing a powder paint binder composition of this invention the solidified liquid paint component preferably has a particle size of less than 120 µm. This particle size can for example be obtained by using the right temperature and/or pressure during the solidification process involving an expansion step. This preference has the additional advantage that a 1-step method for preparing a powder paint, without the usual grinding and sieving can be used, in case the solidified liquid paint component is mixed with other powder paint components with a similar or smaller particle size.

The invention also relates to a new coating, based on a powder paint. Currently only solid components are used in powder paints. Powder paints have been developed later than wet paints. For wet paints a whole scala of wet components, for example liquid crosslinkers are available. For a lot of these wet components no solid equivalent has yet been found with respect to material properties of the resultant coating, for example flexibility and outdoor durability. Another object of the invention is to provide a coating in which these materials are used, whilst having good coating properties. This object is reached by curing the powder paint composition according to the invention, yielding a coating.

The powder paint according to the invention can be applied to a substrate by the general method of application of a powder paint. Methods of applying powder paints to a substrate is for example described in 'Powder Coatings, Chemistry and Technology' van A. Misev (1991, John Wiley) chapter 6. The substrate is not critical. Examples of suitable substrates are both anorganic and organic substrates. Examples of suitable anorganic substrates are metal, glas, ceramics, stone, concrete. Examples of suitable organic materials are paper, cardboard, wood, leather and cork. Applying the powder paint composition according to the invention to a substrate and curing the composition yields a fully or partly coated substrate. In an preferred embodiment of the invention it is also possible to use the powder paint composition on heat sensitive substrates.

The solidified liquid paint component can be used in powder paints for all kinds of applications in all kinds of sectors, for example decorative, outdoor, industrial, automotive, planes, maritime, and/or laundry and household appliances.

It has been found that the method of the invention also can be applied to toner compositions, wherein the liquid paint component is a liquid toner component.

## Claims

1. Method for solidification of a liquid paint component wherein the liquid paint component is packed with a solid auxiliary component to form a solidified liquid paint component.

2. Method for solidification of a liquid paint component according to claim 1, **characterized in that** the liquid paint component is mixed with a molten (semi)crystalline wax and/or molten resin, subsequently cooled down to yield a solidified liquid paint component.

3. Method for solidification of a liquid paint component according to claim 1, **characterised in that** the liquid paint component is provided in a pressurised container, whereafter a gas or a compressible fluid is dissolved in the liquid component at high pressure, resulting in a solution, which is subsequently expanded in the presence of a solid component, yielding a solidified liquid paint component.

4. Method for solidification of a liquid paint component according to claim 1, **characterised in that** the liquid paint component is hydrophobic and is dispersed in a suitable liquid, subsequently adding silicic acid to the dispersion, followed by spray drying.

5. Solidified liquid paint component obtainable by the method according to any of claims 1-4.

6. Solidified liquid paint component according to claim 5, **characterized in that** the liquid paint component is a liquid binder component.

7. Solidified liquid paint component according to any one of claims 5-6, **characterized in that** the liquid paint component is a crosslinker, preferably with the solid auxiliary component being a solid resin and/or the usual additives, fillers and/or pigments.

8. Solidified liquid paint component according to any one of claims 5-6, **characterized in that** the liquid paint component is a resin, preferably an alkyd resin or an UV-curable compound, preferably a mono-, di-, or polyfunctional acrylate, mono-, di-, or polyfunctional methacrylate, or a mixture of any of them.

9. Powder paint binder composition comprising a solidified liquid paint component according to claims 5-8.

10. Powder paint comprising a binder composition according to claim 9.

11. The use of a solidified liquid paint component according to any one of claims 5-8 to produce a powder paint.

12. Method for producing a powder paint according to claim 9, **characterised in that** the solidified liquid paint component according to any one of claims 5-8, preferably with a particle size of less than 120 µm, is fed into a mixing device to be mixed with the other components of the powder paint.

13. Coating produced by curing the powder paint according to any of claims 10-12.

14. Fully or partly coated substrate with the coating according to claim 13.
